(19) Europäisches Patentamt
European Patent Office
Office européen des brevets

(11) Veröffentlichungsnummer: **0 049 394**
**B1**

(12) **EUROPÄISCHE PATENTSCHRIFT**

(45) Veröffentlichungstag der Patentschrift: **28.03.84**

(51) Int. Cl.³: **C 01 B 3/54** // B01D53/36, B01J23/06

(21) Anmeldenummer: **81107345.1**

(22) Anmeldetag: **17.09.81**

(54) **Verfahren zur Entfernung von Blausäure aus Wasserstoff enthaltenden Gasen.**

(30) Priorität: **08.10.80 DE 3037969**

(43) Veröffentlichungstag der Anmeldung: **14.04.82 Patentblatt 82/15**

(45) Bekanntmachung des Hinweises auf die Patenterteilung: **28.03.84 Patentblatt 84/13**

(84) Benannte Vertragsstaaten: **BE DE FR GB IT NL**

(56) Entgegenhaltungen:
**EP - A - 0 037 158**
**DE - B - 2 733 105**
**US - A - 3 859 415**

(73) Patentinhaber: **BASF Aktiengesellschaft, Carl-Bosch-Strasse 38, D-6700 Ludwigshafen (DE)**

(72) Erfinder: **Broecker, Franz Josef, Dr., Schwanthaler Allee 20, D-6700 Ludwigshafen (DE)**
Erfinder: **Gettert, Hans, Dr., Muldweg 2, D-6945 Gross-Sachsen (DE)**
Erfinder: **Kaempfer, Knut, Dr., Petersstrasse 1, D-6700 Ludwigshafen (DE)**

EP 0 049 394 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verfahren zur Entfernung von Blausäure aus Wasserstoff enthaltenden Gasen

Technische Gase, die durch partielle Oxidation von Erdölprodukten oder Kohle entstehen oder bei der Erhitzung fossiler Brennstoffe unter Sauerstoffausschluss (Kokerei) gebildet werden, enthalten in der Regel neben $CO_2$, CO, $H_2$, $CH_4$, $H_2O$, $H_2S$, COS, $N_2$ und HCOOH noch wechselnde Mengen an Blausäure.

Solche Gase werden in den meisten Fällen vor einer Weiterverarbeitung einer Gaswäsche unterworfen, die die Aufgabe hat, die sauren Bestandteile eventuell mit Ausnahme von $CO_2$ zu entfernen. In fast allen zur Gasreinigung verwendeten Lösungsmitteln ist die Blausäure stark löslich und wird daher bei der Lösungsmittelregenierung nur unvollständig entfernt und reichert sich dadurch an.

Die Anreicherung von Blausäure oder deren Hydrolyseprodukt Ameisensäure hat die Blockierung eines Teils des Lösungsmittels zur Folge, so dass die Aufnahmefähigkeit der Lösung herabgesetzt wird. Gleichzeitig führt die Blausäure bzw. deren Hydrolyseproduckt zu erheblichen Korrosionen in den Sauergaswäschen.

Man hat versucht diese Nachteile zu vermeiden (GB-PS Nr. 1406802 und DE-AS Nr. 2733105), indem man zwischen Gaserzeugung und Gasreinigung die Blausäure mit Hilfe des im Gas enthaltenen Wasserstoffs an einem Katalysator bei erhöhter Temperatur hydriert. Bei diesen bekannten Verfahren wird ein Katalysator eingesetzt, der als Aktivkomponente ein Metall der Gruppe VIII, vorzugsweise Co oder Ni und/oder ein Metall der Gruppe VI, vorzugsweise Mo, auf einem Träger enthält.

Bei der technischen Durchführung zeigte sich jedoch, dass unter speziellen Bedigungen die gegebenen Lehren zwar, was die Hydrierung der Blausäure betrifft, zum gewünschten Ziele führte, gleichzeitig aber unerwünschte Nebenreaktionen abliefen.

Bei Anwesenheit grösserer Mengen $H_2S$ neben COS, z.B. $H_2S > 0.05$ Vol.-%, im Gas wird bei erhöhtem Druck durch Hydrierung von COS eine beträchtliche Menge Methylmercaptan gebildet.

Gleichzeitig wird COS durch die Thiokonvertierungsreaktion nachgeliefert.

Das auf diese Weise entstandene $CH_3SH$ wird wegen seiner geringen Acidität nicht in der Sauergaswäsche entfernt und macht das Gas für die meisten Anwendungszwecke unbrauchbar.

Diese unerwünschten Nebenreaktionen laufen bei allen Katalysatoren ab, die als Aktivkomponente Metalle der Gruppen IIb, VIa, VIIa und VIII des periodischen Systems der Elemente einzeln oder als Mischung enthalten.

Aus EP-A Nr. 03715 8 ist auch ein Verfahren zur Entfernung von Blausäure bekannt, bei dem Katalysatoren, die Zink in oxidischer oder sulfidischer Form enthalten, angewendet werden. Es hat sich jedoch gezeigt, dass ein solcher Katalysator nicht die gewünschte Aktivität aufweist.

Es wurde nun gefunden, dass die unerwünschte Bildung von Methylmercaptan nicht eintritt, wenn man einen Katalysator verwendet, der aus der Verbindung $Zn_6Al_2(OH)_{12}(CO_3)_3$ als Katalysatorvorläufer durch Kalzinierung gewonnen wurde, und die Hydrierung bei Temperaturen zwischen 120 und 230°C und erhöhtem Druck durchführt.

Die Erfindung betrifft daher ein kontinuierliches Verfahren zur Entfernung von Blausäure aus Wasserstoff enthaltenden Gasen durch katalytische Hydrierung der Blausäure mit dem im Gas enthaltenen Wasserstoff bei erhöhter Temperatur und erhöhtem Druck, bei dem man Katalysatoren verwendet, die als Aktivkomponente Zink in oxidischer und/oder sulfidischer Form enthalten.

Geeignete Katalysatoren erhält man z.B. durch Verpressen oder Granulieren von reinem ZnO bzw. ZnS. Besonders gute Ergebnisse erzielt man, wenn man für die Hydrierung Katalysatoren verwendet, deren Aktivkomponente in Form eines löslichen Zinksalzes auf einen geeigneten Träger mit möglichst grosser Oberfläche aufgetragen und das Salz durch thermische Behandlung in das Oxid überführt wird. Hierfür geeignete Trägermaterialien sind z.B. $\gamma$-$Al_2O_3$, $MgSiO_3$ Al-Silikat, MgO und andere.

Einen für das erfindungsgemässe Verfahren besonders geeigneten Katalysator erhält man durch gemeinsames Ausfällen von $Zn(NO_3)_2$ und $Al(NO_3)_3$ mit Soda, Abfiltrieren des gebildeten Niederschlags, Auswaschen des Alkalis, Trocknen, Kalzinieren und Verpressen. Das kalzinierte Produckt kann dann entweder zu Strängen verarbeitet oder zu Tabletten verpresst werden. Bei der im nachfolgenden Beispiel beschriebenen Herstellung des Katalysators wird bei der Fällung ein ganz bestimmtes Zn-Al-hydroxydcarbonat erhalten, das durch die im Guinier-Pulverdiagramm auftretenden Linien charakterisiert wird. Die analytische Zusammensetzung entspricht der Summenformel

$$Zn_6\,Al_2\,(OH)_{12}\,(CO_3)_3$$

Das erfindungsgemässe Verfahren für die Hydrierung der Blausäure wird bei Temperaturen im Bereich zwischen 120 - 230°C, vorzugsweise zwischen 140 - 180°C und erhöhtem Druck, z.B. bei 5 bis 300 bar, durchgeführt.

Es werden Raumgeschwindigkeiten zwischen 2000 und 20000 $Nm^3$ Gas/$m^3$ Kat./h vorzugsweise zwischen 4000 und 10000 $Nm^3/m^3/h$ angewendet.

Befinden sich in dem zu reinigenden Gas, aus dem die Blausäure durch Hydrierung entfernt werden soll, noch Schwefelverbindungen, z.B. $H_2S$, COS, $CS_2$ und $CH_3SH$, so wandelt sich unter den Betriebsbedingungen der in oxidischer Form eingesetzte Katalysator in die sulfidische Form um, ohne dabei seine Hydrieraktivität zu verlieren.

*Beispiel:*

A) *Katalysatorherstellung:*

Der Katalysator wird aus einem Katalysatorvorläufer der Summenformel

$Zn_6 Al_2 (OH)_{12} (CO_3)_3$

hergestellt. Zur Fällung des Katalysatorvorläufers werden 2 Lösungen benötigt:

Lösung 1:

54 mol $Zn(NO_3)_2 \cdot 6 H_2O \triangleq 16{,}065$ kg
und 18 mol $Al(NO_3)_3 \cdot 9 H_2O \triangleq 6{,}750$ kg

werden in Wasser gelöst und zu 36 l Lösung aufgefüllt, so dass eine 2molare Lösung entsteht.

Lösung 2:

90 mol technische Soda $\triangleq$ 9,54 kg

werden in Wasser gelöst, so dass 45 l einer 2molaren Lösung entstehen.

Beide Lösungen werden gleichzeitig, aber getrennt in einen Rührkessel gepumpt und bei 80°C und einem pH-Wert von 7,0 vereinigt. Durch Steuerung der Lösungsmenge wird der pH-Wert während der Fällung konstant gehalten. Der als Fällung erhaltene Katalysatorvorläufer wird in einem nachgeschalteten Behälter bei 80°C noch 15 bis 60 min nachgerührt. Der entstandene Niederschlag wird abfiltriert, nitratfrei gewaschen und sprühgetrocknet. Das getrocknete Produkt wird anschliessend so kalziniert, dass das entstehende Produkt einen Glühverlust (2 h bei 900°C) von 4,5 bis 5% besitzt.

Die Entstehung der Verbindung

$Zn_6 Al_2 (OH)_{12} (CO_3)_3$

kann röntgenographisch nachgewiesen werden. Sie ist durch folgende Cu, Kα-Linien im Guiner-Pulverdiagramm gekennzeichnet.

| d(Å) | 6,8 | 4,55 | 3,32 | 2,8 | 2,62 | 2,44 | 1,75 | 1,66 | 1,52 | 1,31 |
|---|---|---|---|---|---|---|---|---|---|---|
| Intensität | s.st. | s.st. | st. | m | st. | st. | m | st. | st. | m |

B) *HCN-Entfernung:*

In eine Versuchsapparatur, bestehend aus Gasvorheizer und Reaktor, wurden jeweils 10 l Katalysator eingefüllt. Durch das Katalysatorbett werden bei 160°C und einem Druck von 40 bar 100 $Nm^3/h$ eines Gases geleitet, das bei der Vergasung von Heizöl S in mit Sauerstoff entstandenen und bei 110°C wassergesättigt ist.

Im ersten Versuch wird ein erfindungsgemässer Zn/Al-Katalysator eingesetzt, im zweiten Versuch ein Co-Mo-haltiger Katalysator.

Die folgende Tabelle gibt die Trockengaszusammensetzung vor und nach der Hydrierstufe mit den beiden verschiedenen Katalysatoren wieder.

| | | Vor der Hydrierstufe | 1. Versuch Zn/Al-Katalysator | 2. Versuch Co/Mo-Katalysator |
|---|---|---|---|---|
| CO | Vol.-% | 47,5 | 47,5 | 47,5 |
| $CO_2$ | Vol.-% | 3,6 | 3,6 | 3,6 |
| $H_2$ | Vol.-% | 48,0 | 48,0 | 48,0 |
| $CH_4$ | Vol.-% | 0,2 | 0,2 | 0,2 |
| $N_2$ | Vol.-% | 0,16 | 0,16 | 0,16 |
| Ar | Vol.-% | 0,14 | 0,14 | 0,14 |
| $H_2S$ | Vol.-% | 0,39 | 0,4 | 0,38 |
| COS | Vol.-ppm | 230 | < 10 | 320 |
| $CH_3SH$ | Vol.-ppm | 0,8 | 0,8 | 940 |
| HCN | Vol.-ppm | 38 | < 1 | < 1 |

Während der Co-Mo-Katalysator unter den Versuchsbedingungen 940 Vol.-ppm $CH_3SH$ erzeugt und gleichzeitig noch eine Vermehrung des COS-Gehaltes bewirkt, tritt beim erfingungsgemässen Katalysator nicht nur keine Vermehrung des Methylmercaptans ein, sondern das im Gas vorhandene COS wird deutlich verringert.

## Patentansprüche

1. Verfahren zur kontinuierlichen Entfernung von Blausäure aus Wasserstoff enthaltenden Gasen durch katalytische Hydrierung der Blausäure mit dem im Gas enthaltenen Wasserstoff bei erhöhter Temperatur und erhöhtem Druck, in Gegenwart von Katalysatoren, die als Aktivkomponente Zink in oxidischer oder sulfidischer Form enthalten, dadurch gekennzeichnet, dass man einen Katalysator verwendet, der aus der Verbindung $Zn_6Al_2(OH)_{12}(CO_3)_3$ als Katalysatorvorläufer durch Kalzinierung gewonnen wurde, und die Hydrierung bei Temperaturen zwischen 120 und 230°C und erhöhtem Druck durchführt.

2. Verfahren nach Anspruch 1, dadurch gekennzeichnet, dass man die Hydrierung bei Temperaturen zwischen 140 und 180°C durchführt.

3. Verfahren nach Anspruch 1, dadurch gekennzeichnet, dass man die Hydrierung bei Raumgeschwindigkeiten von 2000 - 20 000 $Nm^3/m^3/h$, vorzugsweise 4000 bis 10 000 $Nm^3/m^3/h$, ausführt.

## Claims

1. A process for the continuous removal of hydrocyanic acid from hydrogen-containing gases by catalytic hydrogenation of the hydrocyanic acid with the hydrogen contained in the gas, at elevated temperature and pressure in the presence of a catalyst which contains a zinc oxide or sulfide as active component, wherein a catalyst is used which has been obtained by calcination from the compound $Zn_6Al_2(OH)_{12}(CO_3)_3$ as catalyst precursor, and the hydrogenation is carried out at elevated pressure and a temperature of from 120 to 230°C.

2. A process as claimed in claim 1, wherein the hydrogenation is carried out at a temperature of from 140 to 180°C.

3. A process as claimed in claim 1, wherein the hydrogenation is carried out at a space velocity of from 2000 to 20 000 $m^3$ (S.T.P.)/$m^3$/h, preferably from 4000 to 10 000 $m^3$ (S.T.P.)/$m^3$/h.

## Revendications

1. Procédé pour l'élimination en continu de l'acide cyanhydrique de gaz contenant de l'hydrogène, par hydrogénation catalytique de l'acide cyanhydrique avec l'hydrogène contenu dans le gaz, à haute température et sous une pression élevée, en présence de catalyseurs qui contiennent, en tant que constituant actif, du zinc sous forme d'oxyde et/ou de sulfure, caractérisé en ce qu'on utilise un catalyseur qui a été obtenu par calcination à partir du composé $Zn_6Al_2(OH)_{12}(CO_3)_3$ servant de progéniteur de catalyseur et en ce que l'hydrogénation est effectuée à une température comprise entre 120 et 230°C et sous une pression élevée.

2. Procédé selon la revendication 1, caractérisé en ce qu'on effectue l'hydrogénation à une température comprise entre 140 et 180°C.

3. Procédé selon la revendication 1, caractérisé en ce qu'on effectue l'hydrogénation à une vitesse spatiale comprise entre 2000 et 20 000 $Nm^3/m^3/h$, de préférence entre 4000 et 10 000 $Nm^3/m^3/h$.